# EUROPEAN PATENT APPLICATION

(11) **EP 3 841 928 A1**
(43) Date of publication of application: **30.06.2021**
(21) Application number: 20153386.6
(22) Date of filing: 23.01.2020
(51) Int. Cl.: A47J 27/04, A47J 36/32

(54) **STEAM APPLIANCE AND METHOD FOR PREPARING RICE USING THE SAME**

(30) Priority: 25.12.2019 CN 201911357641
(71) Applicant: Koninklijke Philips N.V., 5656 AG Eindhoven (NL)
(72) Inventor: WANG, Zhengqing, 5656 AE Eindhoven (NL); XIONG, Bear, 5656 AE Eindhoven (NL)
(74) Representative: Philips Intellectual Property & Standards

(57) **Abstract**

Embodiments of the present disclosure relate to a steam appliance and a method for preparing rice using the same. The method comprises: supplying steam for a first predetermined period of time to rice and water in a predetermined ratio accommodated in an inner pot of the steam appliance; stopping the supply of the steam; and heating the inner pot for a second predetermined period of time. With the method for preparing the rice using the steam appliance, the prepared rice can have an optimized taste.

## Description

### FIELD OF THE INVENTION

Embodiments of the present disclosure generally relate to the field of food preparation, and more specifically, to a steam appliance and a method for preparing rice using the same.

### BACKGROUND OF THE INVENTION

Rice cookers are common kitchen appliances for cooking rice and have gained a wide popularity due to their convenient operation. The rice cookers are used for preparing rice mainly by boiling. "Boiling" generally indicates that an amount of water for cooking rice is greater than an amount of rice to be cooked. For example, the amount of water is typically about 1.2-1.5 times greater than the amount of rice.

In the course of preparing rice by boiling, a problem that may occur is that it is hard to control a ratio of the water to rice. For example, the amount of water added by a user into the rice cooker may be greater than the amount of water as required. In this circumstance, the prepared rice may taste too soft due to the excess water added. In another example, the amount of water added by the user into the rice cooker may be less than the amount of water as required. In this circumstance, the prepared rice may taste relatively hard due to insufficient water added. The user typically adds water based only on his or her experience such that the ratio of water to rice cannot be controlled accurately, resulting in a bad taste of the rice. To solve the problem, a method for preparing rice comprising introducing steam into the rice cooking process has been proposed.

For example, CN208192789U discloses a rice cooker with a function of steam heating. This rice cooker prepares rice placed in the pot using steam only.

In another example, CN106108611A discloses a rice cooking method with steaming and boiling. In particular, as compared with the rice cooking method purely dependent on the steam, this rice cooking method with steaming and boiling prepares the rice by first heating the rice in an inner pot and then supplying steam to the rice. In other words, in order to obtain rice with a better taste, CN106108611A proposes cooking the rice in the rice cooker by using steam after heating the rice.

Although there are methods for preparing rice by supplying steam, improvements are still needed for a rice preparation method using steam.

### Summary of the invention

Nowadays, in the market, rice cookers generally include two types, one for making rice in a conventional boiling manner (in which a ratio of water to rice is greater than 1:1), and another for supplying steam in the rice cooking process. In general, the latter type solves the problem that it is hard to control the ratio of water to rice existing in the former type. However, in the method for making rice with supplied steam, there arises a problem that rice at the bottom of an inner pot of the rice cooker has a relatively high humidity due to a backflow of condensate water resulting from steam condensation.

In order to at least partially solve the problem of a bad taste of the rice resulting from the relatively high humidity of the rice at the bottom of the inner pot, in embodiments of the present disclosure, a steam appliance and a method for preparing rice using the same are provided .

In a first aspect of the present disclosure, there is provided a method for preparing the rice using a steam appliance. The method comprises: supplying steam for a first predetermined period of time to rice and water in a predetermined ratio accommodated in an inner pot of the steam appliance; stopping the supply of the steam; and heating the inner pot for a second predetermined period of time.

The method for preparing rice using the steam appliance according to the first aspect can at least solve the problem that an overall humidity of the rice inside the inner pot of the rice cooker is not even. The rice prepared using this method can have an improved uniformity of the overall humidity and thus an optimized taste.

In some embodiments, heating the inner pot for the second predetermined period of time comprises heating intermittently at a first power.

In some embodiments, heating the inner pot for the second predetermined period of time comprises heating continuously at a second power.

In some embodiments, the method further comprises auxiliary heating of the inner pot at the beginning of the first predetermined period of time, the auxiliary heating comprising: sensing a temperature in the inner pot; and in response to the sensed temperature reaching a predetermined temperature, stopping the auxiliary heating of the inner pot. In some embodiments, the predetermined temperature is set to be within a range of 40°C to 60°C.

In some embodiments, the method further comprises supplying the steam into the inner pot at a predetermined time interval (T) with a heat preservation period after the second predetermined period of time, to keep the rice at predetermined humidity. In some embodiments, the predetermined time interval is equal to or greater than 1 hour.

In some embodiments, supplying the steam comprises: supplying the steam into the inner pot along a direction from a top of the steam appliance towards a bottom of the steam appliance.

In some embodiments, the predetermined ratio is within a range of 1:0.3 to 1:1.

In some embodiments, the method further comprises: sensing a total weight of the rice and the water in the predetermined ratio in the inner pot; and setting the first predetermined period of time and/or the second predetermined period of time based on the sensed weight.

In some embodiments, the first predetermined period of time is set to be within a range of 20min to 50min.

In some embodiments, the first predetermined period of time is set to be within a range of 25min to 40min.
In some embodiments, the second predetermined period of time is set to be within a range of 3min to 20min.

In some embodiments, the second predetermined period of time is set to be within a range of 5min to 10min.

In a second aspect of the present disclosure, there is provided a steam appliance comprising a controller configured to perform the method according to the first aspect.

It should be appreciated that this Summary is not intended to identify key features or essential features of embodiments of the present disclosure, nor is it intended to be used to limit the scope of the present disclosure. Other features of the present disclosure will be made more obvious through the following description.

### BRIEF DESCRIPTION OF THE DRAWINGS

Through the following detailed description with reference to the accompanying drawings, the above and other objectives, features, and advantages of example embodiments of the present disclosure will become more apparent. The same reference symbols refer to the same components throughout the drawings in which:
Fig. 1 illustrates a flowchart of a method for preparing rice using a steam appliance according to one embodiment of the present disclosure; and
Fig. 2 illustrates a front view of an exemplary steam appliance according to one embodiment of the present disclosure.

### DETAILED DESCRIPTION OF EMBODIMENTS

Embodiments of the present disclosure will now be described in more detail with reference to the drawings. Although some embodiments of the present disclosure are illustrated in the drawings, it would be appreciated that the present disclosure may be implemented in various manners but cannot be limited by the embodiments as described herein. Rather, these embodiments are provided to disclose the present disclosure more thoroughly and completely. It should be appreciated that the drawings and embodiments of the present disclosure are provided merely as an example, without suggesting any limitation to the protection scope of the present disclosure.

As aforementioned, there exists a method for preparing rice in a rice cooker using steam. In such a method, preparing rice is performed using steam only, i.e., the procedure of heating the inner pot (for example, by means of a heating plate) is removed. Alternatively, the rice in the inner pot may be heated first (for example, by means of a heating plate or the like), and then steam may be sprayed into the inner pot of the rice cooker.

However, in the above methods involving steam in the rice-preparing process, there is a common phenomenon that rice at the bottom of the rice cooker is wetter than in other locations in the inner pot, due to the backflow of condensate water resulting from steam condensation.

It is known that the rice taste is closely related to the uniformity of rice humidity. In order to optimize the rice taste, embodiments of the present disclosure provide a method for preparing rice using a steam appliance, which can at least solve the above identified problem. In general, the method according to the embodiments of the present disclosure includes first cooking the rice with steam generated by a steam appliance, and then simmering the rice using a heater of the steam appliance. In this way, the prepared rice has substantially uniform humidity and thus has an improved taste.

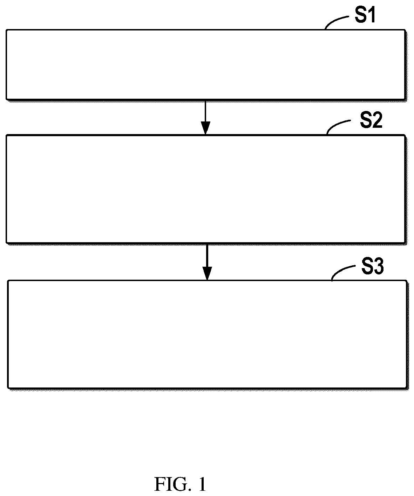

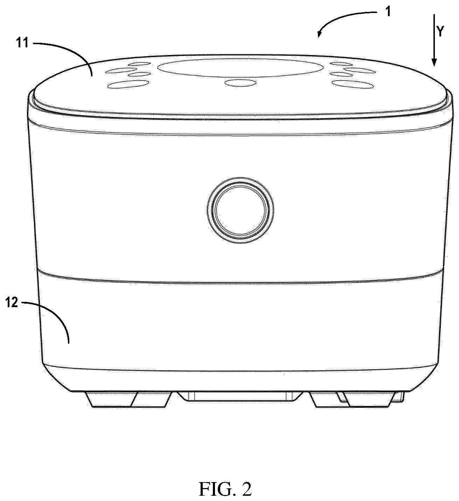

Hereinafter, reference is made to Figs. 1 and 2 describing the method for preparing rice using a steam appliance according to one embodiment of the present disclosure. It is noted that the steam appliance used in the method for preparing rice according to one embodiment of the present disclosure is not limited to any specific steam appliance. Any cooking appliance comprising a steam generator, a steam supplier and a heater can be used to implement the method for preparing rice according to one embodiment of the present disclosure. This type of cooking appliance may be implemented with any appropriate configuration, and details thereof are thus omitted here.

In the method of preparing rice using a steam appliance according to one embodiment of the present disclosure, "rice" refers to any type of edible food selected from a group consisting of, for example, rice, millet, brown rice, sticky rice, purple (or black) rice, semen coicis and a combination thereof, etc.

As mentioned above, in the existing method using steam in the rice preparation process, there arises the problem that the rice at the bottom of the inner pot has relatively high humidity due to the backflow of water from, for example, an inner surface of the inner pot and/or an inner cover of the steam apparatus to the bottom of the inner pot. The backflow of the condensed water to the bottom of the inner pot renders the overall humidity of the cooked rice nonuniform resulting in an unsatisfactory taste of the prepared rice.

In accordance with embodiments of the present disclosure, the rice is first steamed and then simmered by heating, which can alleviate the problem of uneven humidity of the rice resulting from the backflow of the condensed water to the bottom of the inner pot. The method comprises: supplying the steam, for a first predetermined period of time, to the mixture of rice and water in a predetermined ratio, the mixture accommodated in the inner pot of the steaming appliance; stopping the supply of the steam; and heating the inner pot for a second predetermined period of time.

"A steaming appliance" may be for example the steam appliance 1 as shown in Fig. 2, and "an inner pot" may be for example the inner pot of the steam appliance 1. However, as stated above, the cooking appliance for implementing the method according to embodiments of the present disclosure may not be limited to any specifically configured appliance, but instead can be any appliance as long as it has a steam generating function for generating the steam, a steam supplying function for supplying the steam into the inner pot, and a heating function for heating the inner pot and the rice therein.

In the method according to embodiments of the present disclosure, the steam is supplied to the mixture of the rice and the water in the predetermined ratio accommodated in the inner pot of the steam appliance for a first predetermined period such that the rice in the inner pot can be steamed to a well-cooked or a substantially well-cooked level. Since the rice is cooked only by steaming, which does not result in an obvious temperature gradient as compared with that caused by cooking via heating with a heating plate for example, an overall water absorption of the rice can be kept uniform during the cooking with steam for the first predetermined period of time.

The "well-cooked" or "substantially well-cooked" level may be interpreted as that the rice at this level is edible, for example, at least not including raw rice. Typically, in the case that the water absorption of the rice reaches, for example, about 55% to 65%, the rice may be regarded as well-cooked (or substantially well-cooked) rice.

In the method according to embodiments of the present disclosure, in response to termination of the first predetermined period of time, the supply of the steam into the inner pot of the steam appliance can be stopped. Subsequently, the inner pot of the steam appliance or the rice to be prepared by the steam appliance can be heated for the second predetermined period of time.

Given that the steaming is immediately followed by the heating, the condensate water flowing back to the bottom of the inner pot due to steam condensation can be vaporized by the heating, for example, by means of a heating plate. As such, the humidity of the rice at the bottom of the inner pot can be decreased. In this way, the overall humidity of the rice at each location in the inner pot can be uniform.

"Heating" may be implemented in any manner existing currently or to be developed in the future. For example, in some embodiments, the heating may be completed using a heater (for example, a heating plate) at the bottom 12 of the steam appliance 1 as shown in Fig. 2. The heater may be used to heat the inner pot and thus heat the rice in the inner pot. In this case, the heating may be referred to as conductive heating.

In some other embodiments, "heating" may be "Induction Heating (IH)." In those embodiments, the steam appliance 1 may not be provided with the heater at the bottom 12. In this case, the heating may be applied around the inner pot of the steam appliance during the preparation of the rice, such that the temperature control of the steam appliance can be more accurate. In this way, the rice can be heated more uniformly so as to further improve the taste of the prepared rice.

After steaming for the first predetermined period of time, the well-cooked or substantially well-cooked rice in the inner pot is heated, to make the rice at the upper part of the inner pot consistent with that at the bottom and other locations in terms of humidity or water absorption. The rice prepared accordingly has moderate hardness and an optimized taste.

In the method according to embodiments of the present disclosure, the amount of the rice can be greater than or equal to the amount of water added into the inner pot of the steam appliance. In some embodiments, the amount of the water initially added into the inner pot of the steam appliance is only required to reach the minimum amount of the water required for expansion of the rice in the rice-cooking process. The requirement on the "minimum amount of water" is common knowledge for those skilled in the art, and thus details of which are omitted here.

In some embodiments, the ratio of the rice to the water may be within the range of 1:0.3 to 1:1. For example, in some embodiments, the ratio of the rice to the water maybe about 1:0.4, about 1:0.5, about 1:0.6, about 1:0.7, about 1:0.8, about 1:0.9, and the like.

In some embodiments, the "first predetermined period of time" and the "second predetermined period of time" may be preset for the steam appliance, in particular for a controller of the steam appliance 1. The first predetermined period of time may be preset to be within a range of 20 min to 50 min. For example, the first predetermined period of time may be preset to be within a range of 25 min to 40 min. In another example, the first predetermined period of time may be preset to be within a range of 25 min to 35 min.

In addition, the second predetermined period of time may be preset to be within a range of 5min to 10min. For example, the second predetermined period of time may be preset to be within a range of 5 min to 8 min, such as 7 min or the like.

In some other embodiments, the "first predetermined period of time" and the "second predetermined period of time" may be determined by the steam appliance in real time. In such a circumstance, the steam appliance 1 may include, for example, a sensor such as a weight sensor. As such, the steam appliance 1 may sense a total weight of the rice and the water in the inner pot via the weight sensor. Then, the controller may set any one of the first period of time and the second period of time based on the sensed total weight of the rice and the water.

In some embodiments, the weight sensor may be disposed on the inner pot of the steam appliance 1 or any other appropriate structure, as long as the weight sensor can sense accurately the weight of the rice and the water in the inner pot.

For example, if the weight sensor senses that the total weight of food (including the rice and the water, for example) to be prepared in the inner pot is less than or equal to a predetermined value (e.g., a serving amount for a single person), then the controller may set the first predetermined period of time relatively short, for example, to be within a range of 20 min to 30 min. In another example, if the weight sensor senses that a weight of the food to be prepared in the inner pot is greater than a predetermined value (e.g., a serving amount for two or more persons), then the controller may set the first predetermined period of time relatively long, for example, to be within the a range of 30min to 45min.

Besides the weight sensing, in some further embodiments, the setting of any one of the first predetermined period of time and the second predetermined period of time may be input directly via a user interface of the steam appliance. For example, according to the different types of rice (for example, cooking times for the white rice and the semen coicis, respectively, are usually different), the user may directly select operation buttons on a panel of the steam appliance. The controller may determine duration of any one of the first predetermined period of time and the second predetermined period of time based on the input from the user.

To sum up, in the method according to the embodiments of the present disclosure, the first predetermined period of time and the second predetermined period of time may be set or determined in any appropriate manner. Moreover, the specific durations of the first predetermined period of time and the second predetermined period of time are not limited to the example numerical ranges listed in the context of the present disclosure.

It is particularly important that at the end of the first predetermined period of time, the rice in the inner pot of the steam appliance will reach the well-cooked or substantially well-cooked level. Further, at the end of the second predetermined period of time, the rice in each location inside the inner pot of the steam appliance will have uniform water absorption, i.e., the overall humidity of the rice at respective locations is the same or substantially the same. The rice prepared in this way has a significantly optimized taste.

In addition, in some embodiments, the inner pot may be heated intermittently at a first power (similar to cooking intermittently with big fire) for the second predetermined period of time. In some other embodiments, the inner pot may be heated continuously at a second power (similar to cooking with small or medium fire) for the second predetermined period of time. Typically, the first power for intermittently heating may be greater than the second power for continuously heating.

In some embodiments, the method may comprise supplying the steam intermittently into the inner pot in a heat preservation phase after the heating implemented for the second predetermined period of time so as to keep the rice fresh. For example, in the heat preservation phase, which for example, immediately follows the second period of time, the steam may be supplied into the inner pot at a predetermined time interval T so as to maintain a predetermined humidity of the rice in the inner pot. Maintaining the predetermined humidity of the rice can ensure the freshness of the rice. That is, even after a certain time, the prepared rice can be kept as fresh as it was when it was just prepared. In some embodiments, the predetermined time interval T may be set to be equal to or greater than 30min. In some other embodiments, the predetermined time interval T may be set to be equal to or greater than 1 hour.

For example, in the heat preservation phase which is immediately after the heating for the second predetermined period of time, the steam generator disposed, for example, at the bottom 12 of the steam appliance 1 may generate steam rapidly at the predetermined time interval T. That is, two consecutive supplies of the steam are separated by the predetermined time interval T. Then, the generated steam can be supplied to the rice in the inner pot via, for example, the steam supplier (which may be implemented as a spay device or sprinkle, such as a nozzle or the like) disposed on the top 11 of the steam appliance 1. In this way, the rice in the inner pot can be maintained at a predetermined humidity.

In some embodiments, the overall supplying of steam at the predetermined time interval T may last for a long time, for example, up to about 36 hours. The rice maintained at the predetermined humidity according to embodiments of the present disclosure will not have a yellow color and will be as fresh in taste as it was when it was just prepared.

Fig. 1 illustrates a method for preparing rice with the steam appliance according to embodiments of the present disclosure. At block S1, the steam is supplied, for a first predetermined period of time, to the rice and the water in the predetermined ratio accommodated in the inner pot of the steam appliance 1. At block S2, the supplying of the steam into the inner pot is stopped. At block S3, the inner pot is heated for a second period of time.

In some embodiments, as compared with the method as illustrated in connection with Fig. 1, the method may include auxiliary heating during the performing at block S1. For example, the auxiliary heating may be performed within the first predetermined period of time during the process of supplying the steam to the rice and the water in the predetermined ratio accommodated in the inner pot of the steam appliance 1. Specifically, the auxiliary heating may be applied to the inner pot during the first predetermined period of time, in particular, at the beginning of the first predetermined period of time. In this way, a total time required for preparing rice can be reduced.

In some embodiments, in order to control the auxiliary heating, ambient temperature inside the inner pot or temperature of the food to be prepared may be sensed in real time. Then, in response to the sensed ambient temperature inside the inner pot or the sensed temperature of the food to be prepared reaching a predetermined temperature, heating of the inner pot can be stopped.

For example, in order to shorten the cooking time consumed by steaming, the heater at the bottom of the inner pot may be controlled to operate at the same time of entering the steam supplying phase (at block S1). In this case, as compared with only supplying the steam to the inner pot for the first predetermined period of time, the ambient temperature of the inner pot or the temperature of the food can reach the predetermined temperature more quickly by performing the auxiliary heating. Subsequently, in response to the sensed ambient temperature of the inner pot or the sensed temperature of the food reaching the predetermined temperature, the heater is controlled to stop the auxiliary heating. For example, a temperature limiting device at the bottom of the inner pot may be used to determine whether the ambient temperature of the inner pot or the temperature of the food has reached the predetermined temperature.

In some embodiments, the predetermined temperature may be set to be within a range of about 40°C to 60°C, for example, about 50°C. The predetermined temperature within the range of 40°C to 60°C is typically regarded as a temperature for causing the rice to be gelatinized. In other words, in the method according to embodiments of the present disclosure, the auxiliary heating is not involved in the rice gelatinization process. As such, the temperature for causing the rice to be gelatinized is more even, and the total water absorption of the rice is kept consistent under the effect of the steaming. In this way, the taste of the rice can be optimized.

In the embodiments related to the supplying of the steam into the inner pot, the steam can be supplied into the inner pot along an example direction Y (Fig. 2) from the top 11 of the steam appliance 1 towards the bottom 12 of the inner pot.

However, it should be appreciated that, as has been stated above, any cooking device with a steam generator, a steam supplier and a heater can be used to implement the method according to embodiments of the present disclosure. Therefore, the steam supply direction is not intended to be limited to the direction Y as shown in Fig. 2. According to the specific configuration for the steam generator, the steam supplier, the heater and other related components of the cooking appliance, the illustrated steam supplying manner can be adjusted correspondingly.

The numerical values and the numerical ranges as mentioned above are provided merely for illustration but not intended to limit the embodiments of the present disclosure within special scenarios. Any reasonable numerical value or numerical value range is feasible according to embodiments of the present disclosure.

Although the embodiments of the present disclosure are illustrated and described in the drawings and the foregoing description, the illustration and description should be interpreted as being provided illustratively or exemplarily, rather than restrictively; and the scope of the present disclosure is not confined to the embodiments disclosed herein. When practicing the invention claimed herein, those skilled in the art would understand and carry out other variants of the embodiments disclosed here through study of the drawings, this context and the appended claims.

In the claims, the word "include" is not read as excluding other elements and the indefinite article "a" or "an" is not read as excluding a plurality. A single element or other unit may fulfill functions of multiple items as set forth in the claims. The fact that some features are recited only in embodiments different than one another or dependent claims does not mean that a combination of these features cannot be applied advantageously. Without departing from the spirit and scope of the present application, the present disclosure covers various embodiments or any possible combination of various features as recited in dependent claims.

Any reference sign in the claims should not be construed as limiting the scope of the present disclosure.

## Claims

1. A method for preparing rice using a steam appliance, comprising:
supplying steam, for a first predetermined period of time, to rice and water in a predetermined ratio accommodated in an inner pot of the steam appliance;
stopping the supply of the steam; and
heating the inner pot for a second predetermined period of time.

2. The method of claim 1, wherein heating the inner pot for the second predetermined period of time comprises heating intermittently at a first power.

3. The method of claim 1, wherein heating the inner pot for the second predetermined period of time comprises heating continuously at a second power.

4. The method of any of claims 1-3, further comprising auxiliary heating of the inner pot at the beginning of the first predetermined period of time, the auxiliary heating of the inner pot comprising:
sensing a temperature inside the inner pot; and
in response to the sensed temperature reaching a predetermined temperature, stopping the auxiliary heating of the inner pot.

5. The method of claim 4, wherein the predetermined temperature is set to be within a range of 40°C to 60°C.

6. The method of any of claims 1-5, further comprising supplying the steam into the inner pot at a predetermined time interval (T) within a heat preservation period after the second predetermine period of time.

7. The method of claim 6, wherein the predetermined time interval (T) is equal to or greater than 1 hour.

8. The method of any of claims 1-7, wherein supplying the steam comprises: supplying the steam into the inner pot along a direction (Y) from a top (11) of the steam appliance (1) towards a bottom (12) of the steam appliance (1).

9. The method of any of claims 1-8, wherein the predetermined ratio is within a range of 1:0.3 to 1:1.

10. The method of any of claims 1-9, further comprising:
sensing a total weight of the rice and the water in the predetermined ratio in the inner pot; and
setting at least one of the first predetermined period of time and the second predetermined period of time based on the sensed weight.

11. The method of any one of claims 1-10, wherein the first predetermined period of time is set to be within a range of 20 min to 50 min.

12. The method of any one of claims 1-11, wherein the first predetermined period of time is set to be within a range of 25 min to 40 min.

13. The method of any of claims 1-12, wherein the second predetermined period of time is set to be within a range of 3 min to 20 min.

14. The method of any of claims 1-13, wherein the second predetermined period of time is set to be within a range of 5 min to 10 min.

15. A steam appliance comprising a controller configured to perform the method of any of claims 1-14.
